# EUROPEAN PATENT SPECIFICATION

(11) **EP 3 198 952 B1**
(45) Date of publication and mention of the grant of the patent: **13.11.2019**
(21) Application number: 15750862.3
(22) Date of filing: 24.07.2015
(51) Int. Cl.: H04W 52/24

(54) **POWER ADAPTION AND RANDOMIZATION FOR INTERFERENCE CANCELATION AND MITIGATION**
LEISTUNGSADAPTION UND -RANDOMISIERUNG INTERFERENZUNTERDRÜCKUNG UND -MINDERUNG
ADAPTATION ET RANDOMISATION DE PUISSANCE POUR UNE ANNULATION ET UNE ATTÉNUATION DE BROUILLAGE

(30) Priority: 24.09.2014 US 201414495738
(43) Date of publication of application: 02.08.2017
(73) Proprietor: INTEL Corporation, Santa Clara, CA 95054 (US)
(72) Inventor: XUE, Feng, Redwood City, California 94065 (US); FWU, Jong-Kae, Sunnyvale, California 94087 (US); DAVYDOV, Alexei, Nizhny Novgorod NIZ 603132 (RU)
(74) Representative: Goddar, Heinz J.
(86) International application number: PCT/US2015/042058
(87) International publication number: WO 2016/048443

(56) References cited:
- EP-A2- 2 061 283
- WO-A1-2011/098655
- WO-A1-2013/026643
- WO-A2-01/84740
- US-A1- 2009 252 247
- HUAWEI ET AL: "TP on Network Assisted IC", 3GPP DRAFT; R1-134828 TP ON NETWORK ASSISTED IC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Guangzhou, China; 20131007 - 20131011 11 October 2013 (2013-10-11), XP050750435, Retrieved from the Internet: URL:http://www.3gpp.org/ftp/tsg_ran/WG1_RL 1/TSGR1_74b/Docs/ [retrieved on 2013-10-11]

## Description

### CROSS-REFERENCE TO RELATED APPLICATIONS

The present application claims to U.S. Patent Application No. 14/495,738, filed September 24, 2014, entitled "POWER ADAPTATION AND RANDOMIZATION FOR INTERFERENCE CANCELATION AND MITIGATION".

### FIELD

Embodiments of the present invention relate generally to the technical field of data processing, and more particularly, to computer devices operable to communicate data over a network.

### BACKGROUND

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure. Unless otherwise indicated herein, the approaches described in this section are not prior art to the claims in the present disclosure and are not admitted to be prior art by their inclusion in this section.

Interference associated with co-scheduled user equipment ("UE") such as in multiuser multiple input/multiple output environments, or from neighboring cell UEs may impede cellular communication. One approach to mitigating interference is to schedule UEs on orthogonal frequency-time resources. This scheduling approach, however, may waste some resources, particularly where UEs already have appreciable spatial separation. Furthermore, coordinating resources across cells may be challenging for cell-edge UEs. While semi-static resource allocation, such as enhanced inter-cell interference coordination ("elCIC") or fractional frequency reuse ("FFR") may be employed, resource allocation and the adaption thereof may be complex.

Another approach to reduce interference may be multiple-input and multiple-output ("MIMO") to spatially separate UEs. For intra-cell interference, multiple user MIMO ("MU-MIMO") may leverage multiple UEs as spatially distributed transmission resources. For inter-cell interference, MIMO coordination across cells may be employed. For both the intra-cell and inter-cell scenarios, accurate channel state information may be necessary. Particularly for inter-cell MIMO coordination, accurate channel state information may be difficult to obtain.

WO 2011/098655 A1 discloses an apparatus for providing interference cancellation, including a processor and memory including computer program code. which is configured to cause the apparatus to identify an interval of received signal power levels for interference cancellation of an interfering signal to a primary signal, and generate a message that provides the interval of received signal power levels for the interference cancellation of the interfering signal to the primary signal.

HUAWEI ET AL: "TP on Network Assisted IC", 3GPP DRAFT discloses a method of adopting an interference cancellation receiver, including receiving signaling of a transmission power associated with a first resource element, receiving a high signal shared control channel (HS-SCCH) by a network assisted interference cancellation user equipment and performing interference cancellation based on the indication of the transmission power.

Existing approaches to interference cancellation may suffer from one or more issues. For example, if neighboring cells allocate resources semi-statically (e.g., elCIC, FFR, etc.), then power adaptation may be too slow for traffic and/or user changes. If neighboring cells (or MU-MIMO intra-cell scheduling) coordinate in the spatial domain by taking advantage of MIMO, then accurate and fast information needs to be shared and/or coordinated. This may be challenging, especially in cross-cell scenarios. Further, it may be difficult to achieve good spatial beamforming patterns even if all channel states are available (e.g., due to a limited number of transmit antennas and/or multiple interference transmitters). In view of these approaches to mitigate interference, solutions with lower complexity and/or coordination overhead may differently address interference.

The invention is defined by the appended independent claims. Dependent claims constitute embodiments of the invention. Any other subject-matter falling outside the scope of the claims is to be regarded as an example not in accordance with the invention.

### BRIEF DESCRIPTION OF THE DRAWINGS

The embodiments of the invention are illustrated by way of example and not by way of limitation in the figures of the accompanying drawings in which like references indicate similar elements. It should be noted that references to "an" or "one" embodiment of the invention in this disclosure are not necessarily to the same embodiment, and they may mean at least one.
FIG. 1 is a block diagram showing an environment in which downlink transmission power levels may be adjusted to facilitate interference cancellation at a UE, in accordance with various embodiments
FIG. 2 is a block diagram illustrating randomization of transmission power levels for a plurality of resource elements, in accordance with various embodiments.
FIG. 3 is a line graph illustrating a potential performance gain associated with randomization of transmission power, in accordance with various embodiments.
FIG. 4 is a line graph illustrating another potential performance gain associated with randomization of transmission power, in accordance with various embodiments.
FIG. 5 is a block diagram illustrating a block diagram illustrates a resource region comprised of a plurality of time and frequency resources, in accordance with various embodiments.
FIG. 6 is a flow diagram illustrating a method for proactively requesting a power adaptation by a UE for IC, in accordance with various embodiments.
FIG. 7 is a flow diagram illustrating a method for transmission power randomization to facilitate IC at a UE, in accordance with various embodiments.
FIG. 8 is a flow diagram illustrating a method for adjusting a transmission power level in response to a request from a UE, in accordance with various embodiments.
FIG. 9 is a flow diagram illustrating a method for adjusting the transmission power of a plurality of resource elements associated with a downlink transmission, in accordance with various embodiments.
FIG. 10 is a block diagram illustrating a computing device adapted to operate in a wireless communication network, in accordance with various embodiments.
FIG. 11 is a block diagram illustrating a transmitting device, in accordance with various embodiments.

### DETAILED DESCRIPTION

In the following detailed description, reference is made to the accompanying drawings, which form a part hereof wherein like numerals designate like parts throughout, and in which is shown by way of illustration embodiments that may be practiced. It is to be understood that other embodiments may be utilized and structural or logical changes may be made without departing from the scope of the present disclosure. Therefore, the following detailed description is not to be taken in a limiting sense, and the scope of embodiments is defined by the appended claims and their equivalents.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order than the described embodiment. Various additional operations may be performed and/or described operations may be omitted in additional embodiments.

For the purposes of the present disclosure, the phrases "A or B" and "A and/or B" means (A), (B), or (A and B). For the purposes of the present disclosure, the phrase "A, B, and/or C" means (A), (B), (C), (A and B), (A and C), (B and C), or (A, B, and C).

The description may use the phrases "in an embodiment," or "in embodiments," which may each refer to one or more of the same or different embodiments. Furthermore, the terms "comprising," "including," "having," and the like, as used with respect to embodiments of the present disclosure, are synonymous.

As used herein, the terms "module" and/or "logic" may refer to, be part of, or include an Application Specific Integrated Circuit ("ASIC"), an electronic circuit, a processor (shared, dedicated, or group), and/or memory (shared, dedicated, or group) that execute one or more software or firmware programs, a combinational logic circuit, and/or other suitable hardware components that provide the described functionality.

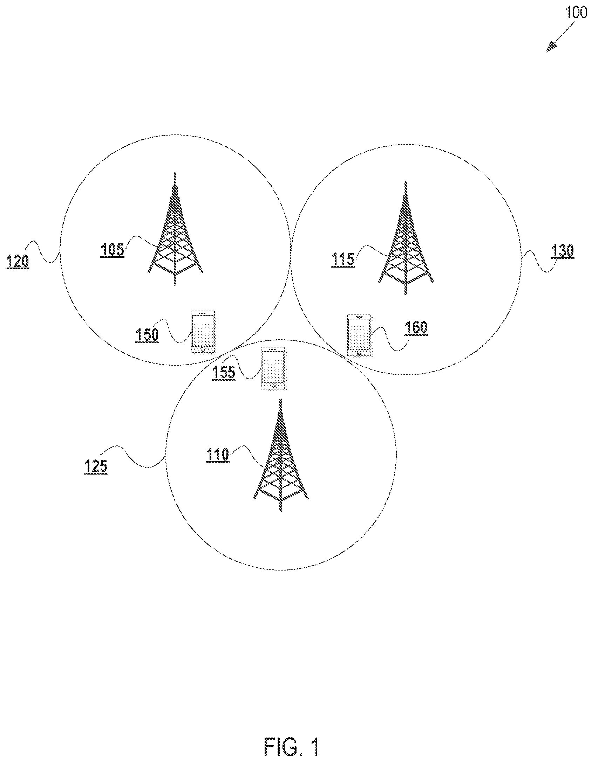

Beginning first with FIG. 1, a block diagram shows an environment 100 in which downlink transmission power levels may be adjusted to facilitate interference cancellation ("IC") at a UE, in accordance with various embodiments. The UEs 150-160 may be any type of computing device equipped with broadband circuitry and adapted to operate on a cell (e.g., the cells 120-130) according to, for example, one or more 3rd Generation Partnership Project ("3GPP") technical specifications. For example, one of the UEs 150-160 may be a netbook, a tablet computer, a handheld computing device, a web-enabled appliance, a gaming device, a mobile phone, a smartphone, an eBook reader, a personal data assistant, or the like. In another embodiment, one of the UEs 150-160 may be a computing device that is not primarily adapted for user communications (e.g., voice calling, text/instant messaging, web browsing), such as a smart metering device, payment device (e.g., a "pay-as-you-drive" device), a vending machine, a telematics system (e.g., a system adapted for tracking and tracing of vehicles), a security system (e.g., a surveillance device), and the like.

According to embodiments, the UEs 150-160 may be configured for intersystem communication by operating on one or more wireless cells 120-130. Each wireless cell 120-130 may be provided by a respective evolved Node B ("eNB").

The eNBs 105-115 may act as a mobility anchors towards a core network (not shown). The eNBs 105-115 may connect the UEs 150-160 to a core network, for example, as part of a third Generation ("3G"), fourth Generation ("4G"), fifth Generation ("5G"), or beyond system that adheres to one or more standards, such as Long Term Evolution ("LTE"), LTE-Advanced ("LTE-A"), or other similar standard.

While operating on a first cell 120, a first UE 150 may receive downlink transmissions from a first eNB 105. The downlink transmissions are to include a signal intended for the first UE 150. However, the downlink transmissions that include the signal may also include interference. For example, where the first UE 150 is near an edge of the first cell 120, another transmission from a second eNB 110 may include data at the same resources (e.g., time and/or frequency resources) as the intended signal. Therefore, the other transmission may reach the first UE 150 and interfere with the intended signal from the first eNB 105.

To address interference, the first UE 150 may be adapted to perform one or more interference cancellation ("IC") techniques. In various embodiments, the first UE 150 may benefit from a discernable difference between the transmission power associated with the intended signal from the first eNB 105 and the transmission power associated with the interference signal from the second eNB 110. For example, the first UE 150 may perform IC where the signal power level and the interference power level are different by several decibels ("dB"). In embodiments, the first UE 150 may be adapted to perform IC regardless of whether the signal power level is greater than the interference power level or vice versa.

For example, the first UE 105 may be adapted for symbol-level IC. The UE 150 may be adapted to estimate what the intended signal is and begin decoding symbols from estimated intended signal. Symbols which cannot be sufficiently decoded may be treated with another non-IC decoding technique. Each symbols, and respective confidence levels, may then be processed by a channel decoder for codeword decoding.

Where other transmissions from one of the other eNBs 110, 115 interfere with a signal transmitted by the first eNB 105 for the first UE 150, adjusting one or more transmission powers at one of the eNBs 105-115 may improve IC at the first UE 150. Such adjustments may be differently accomplished in embodiments.

According to some embodiments, a first UE 150 that may receive interference with a signal may proactively request an adjustment to a transmission power. In embodiments, the first UE 150 may determine that a greater difference between the signal power level and the interference power level would facilitate IC at the first UE 150. Therefore, the first UE 150 may be adapted to generate a request for at least one of the eNBs 105-115 for an adjustment to a respective downlink transmission power.

In one embodiment, the request may simply be a request for an adjustment to a transmission power. In one embodiment, the request may include an indication of whether an increase or a decrease in transmission power. In one embodiment, the request may include an indication of a value for an increase or decrease in transmission power. For example, the request may include an indication of one or more increments or decrements for an adjustment to a transmission power (e.g., an indication of value of a number of standard dB steps the transmitting node is to take up or down). In another example, the request may include a specific dB value.

In one embodiment, the first UE 150 may transmit the generated request to the first eNB 105, which serves the first UE 150. In another embodiment, the first UE 150 may transmit the generated request to another eNB 110, 115 that does not serve the first UE 150, i.e., an eNB that transmit the interference. In such embodiment, the first UE 150 may transmit the generated request using a common uplink channel that is allocated for UEs to request power adaptations to non-serving cells 125, 130.

Based on reception of the request, the receiving eNB 105-115 may adjust its downlink transmission power. In one embodiment, the receiving eNB 105-115 may not adjust its downlink transmission power by the exact amount indicated by the request, but may take the request (e.g., a value included therein) into account when computing a downlink transmission power level that is satisfactory.

In some embodiments, the receiving eNB 105-115 may need to indicate to other UEs that the receiving eNB 105-115 has adjusted its transmission power level. In such embodiments, the transmission power level between reference signal ("RS") signals and data signals may be different. For example, a second eNB 110 that adjusts its transmission power based on a request from a first UE 150 that is not served by the second eNB 110 may need to notify a second UE 155 that is served by the second eNB 110. In embodiments, where the transmission power level is the same for both the RS signals and the data signals (e.g., channel state information ("CSI") RS signals), other UEs may not need to be notified. In MU-MIMO scenarios, the receiving eNB 105-115 may need to adjust a power ratio between paired UEs.

According to some embodiments, a first eNB 105 may randomize transmission powers associated with resource elements to facilitate IC at a first UE 150. This randomization may in fact be pseudorandom and may cause a difference of one or more dB between a signal power level intended for the first UE 150 and an interference power level from another eNB 110-115 received at the first UE 150. This randomization approach may reduce or eliminate the need for complex cross-cell coordination to mitigate interference and/or improve IC at a UE. Further, this randomization approach may address a number of interfering signals.

In one embodiment, the first eNB 105 may adjust one or more transmission powers associated with a resource on which the first UE 150 is served. The resource may be divided into chunks, or pluralities of resource elements. To effect a dB difference between a signal transmission power and an interference transmission power, transmission powers for pluralities of resource elements may be different across the resource on which the first UE 150 is served.

In various embodiments, respective transmission powers for respective pluralities of resource elements may be based on a pseudorandom sequence. The pseudorandom sequence may be based on a seed, which the first eNB 105 may transmit to the first UE 150 so that the first UE 150 may have an indication of the respective transmission powers for respective pluralities of resource elements. Accordingly, the first UE 150 may be able to compute or estimate the signal power level to perform IC.

In performing IC, the first UE 150 may account for a fluctuation in the signal from the first eNB 105 (e.g., an intended signal may fluctuate in a range of +3 or -3 dB). In connection with this, a fluctuation range may be transmitted to the first UE 150 by the first eNB 105. In one embodiment, the fluctuation range may be implicitly embedded in the sequence so that where the first UE 150 generates the sequence from the seed, the first UE 150 also generates the fluctuation range. In another embodiment, the first eNB 105 may transmit the fluctuation range to the first UE 150, for example, in a same or different message.

For embodiments associated with both proactive requests for transmission power adjustments and randomization of transmission power, a region on a resource map (i.e., frequency × time) may be associated with power adaptation - e.g., a region may be dedicated to one or more UEs that proactively request transmission power adjustments and/or for which transmission power is randomized.

In various embodiments, a plurality of eNBs 105-115 may coordinate the region associated with power adaptation. This coordination may be slow coordination, for example, over an X2 interface. Each eNB 105-115 would then schedule respective UEs 150-160 in such a region to apply the power adjustment approaches disclosed herein.

In addition to coordinating transmission powers, the plurality of eNBs 105-115 may be adapted to coordinate according to other embodiments. For example, the plurality of eNBs 105-115 may coordinate a region on a resource map that only serves Quadrature Phase Shift Keying ("QPSK").

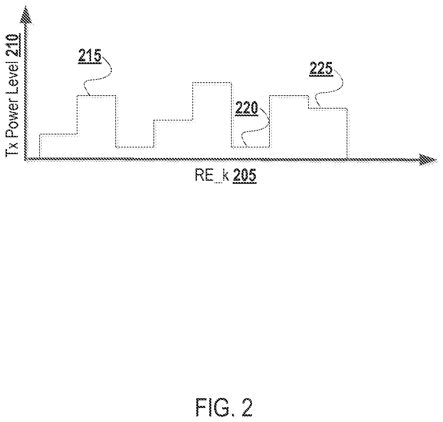

With respect to FIG. 2, a block diagram illustrates randomization of transmission power levels 210 for a plurality of resource elements 205, in accordance with various embodiments. In embodiments, an eNB may randomize downlink transmission powers associated with resource elements. This randomization may be based on a pseudorandom sequence, wherein the sequence may be generated from a seed.

In various embodiments, a downlink transmission for a UE may be comprised of a plurality of resource elements 205. In an effort to create a difference between the signal power level associated with the resource elements 205 and an interference power level, the transmission power level 210 may be randomized for a plurality of resource elements.

For example, one or more resource elements 215 may be transmitted according to a first transmission power. The first transmission power may be based on a sequence, such as a dB value that is an element of a pseudorandom sequence. One or more other resource elements 220 may be transmitted according to a second transmission power, which may be lower than the first transmission power. The second transmission power may be also based on the sequence, such as another dB value that is an element of the pseudorandom sequence. One or more additional resource elements 225 may be transmitted according to a third transmission power, which may be different from the first and/or second transmission powers. The third transmission power may be also based on the sequence, such as an additional dB value that is an element of the pseudorandom sequence.

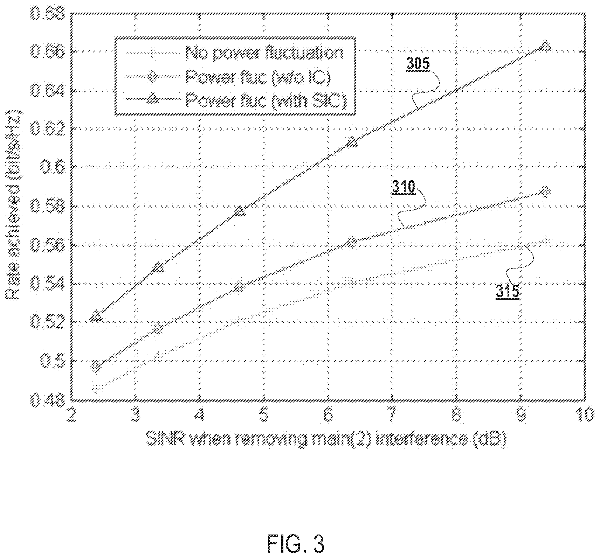

Turning to FIG. 3, a line graph illustrates a potential performance gain associated with randomization of transmission power, in accordance with various embodiments. In the embodiments, there may be two dominant interferers. The x-axis shows the signal-to-interference-plus-noise ratio ("SINR") when removing the two dominant interferers (in dB). The y-axis shows the rate achieved (e.g., spectral efficiency) in bits/second/hertz ("bit/s/Hz"). A first curve 305 illustrates performance when symbol-level IC is applied with an IC threshold of five (5) dB. A second curve 310 illustrates performance when IC is not applied. And a third curve 315 illustrates performance when there is no power fluctuation - e.g., where transmission power is substantially the same and may not be randomized. In this embodiment, the power fluctuation range (linear) may be between .2 and 1.8 dB. Due to power fluctuations - e.g., randomization of transmission power - performance may improve by approximately ten (10) to thirty (30) percent, which may equate to improved signal detection over interference and/or noise.

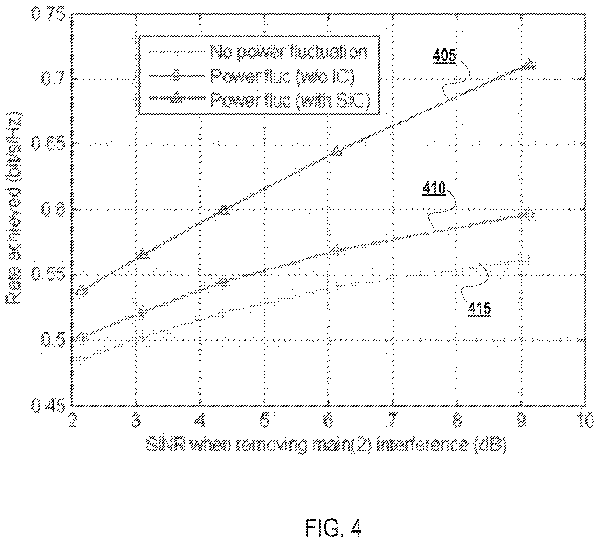

At FIG. 4, a line graph illustrates another potential performance gain associated with randomization of transmission power, in accordance with various embodiments. In the embodiments, there may be two dominant interferers. The x-axis shows the SINR when removing the two dominant interferers (in dB). The y-axis shows the rate achieved (e.g., spectral efficiency) in bit/s/Hz. A first curve 405 illustrates performance when symbol-level IC is applied with an IC threshold of five (5) dB. A second curve 410 illustrates performance when IC is not applied. And a third curve 415 illustrates performance when there is no power fluctuation - e.g., where transmission power is substantially the same and may not be randomized. In this embodiment, the power fluctuation range (linear) may be between .1 and 1.9 dB. Due to power fluctuations - e.g., randomization of transmission power - performance may improve by approximately ten (10) to thirty (30) percent, which may equate to improved signal detection over interference and/or noise.

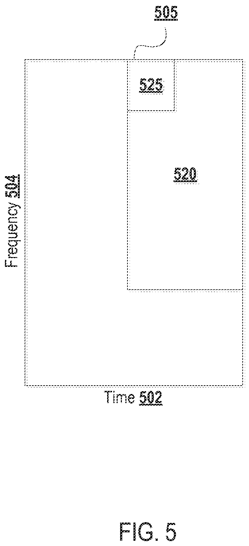

Now with reference to FIG. 5, a block diagram illustrates a resource region 505 comprised of a plurality of time 502 and frequency 504 resources, in accordance with various embodiments. In embodiments, the region 505 may be scheduled to be by transmitted to an eNB by a UE, such as an eNB 105-115 and/or a UE 150-160 of FIG. 1.

In embodiments, a sub-region 520 of the region 505 may be associated with power adaptation and/or randomization. An eNB may be adapted to schedule one or more UEs associated with power adaptation and/or randomization (e.g., cell-edge UEs, interference-limited UEs, etc.) on this sub-region 520. In various embodiments, this sub-region 520 may include a control region 525, which may include control information, such as control information for one or more UEs associated with power adaptation and/or randomization (e.g., cell-edge UEs, interference-limited UEs, etc.).

In embodiments, a plurality of eNBs may coordinate so that respective UEs served by each of the plurality of eNBs may be scheduled on a same sub-region 520. Thus, eNBs may schedule UEs associated with power adaptation and/or randomization (e.g., cell-edge UEs, interference-limited UEs, etc.) in a same sub-region 525. In one embodiment, the plurality of eNBs may coordinate this sub-region 520 through slow coordination (e.g., through an X2 interface). In one embodiment, the control region 525 may include information associated with coordination (e.g., cell coordination and/or UE coordination). Besides coordinating a region 505 associated with power adaptation and/or randomization, other coordination may be applied between eNBs as well. For example, the plurality of eNBs may coordinate so that all UEs in the sub-region 520 may be served only on QPSK.

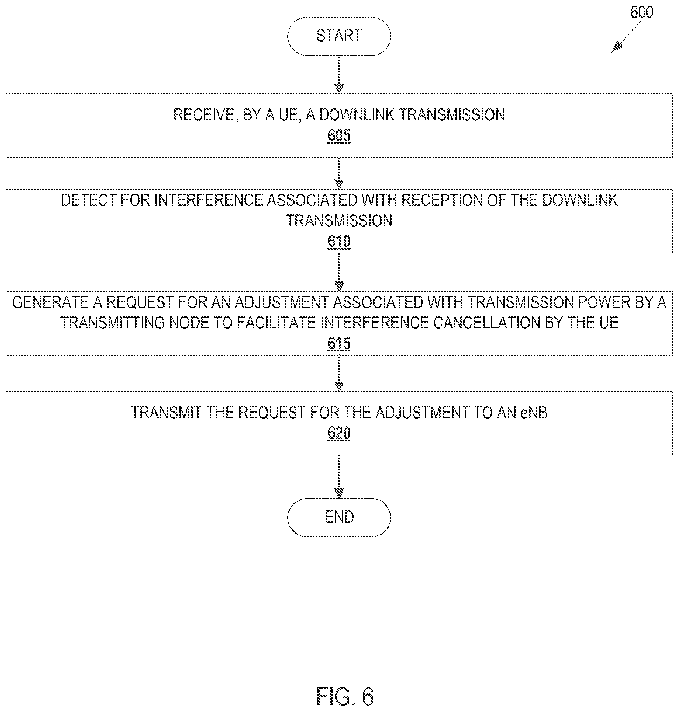

With respect to FIG. 6, a flow diagram illustrates a method 600 for proactively requesting a power adaptation by a UE for IC, in accordance with various embodiments. The method 600 may be performed by a UE, such as the UE 150 of FIG. 1. While FIG. 6 illustrates a plurality of sequential operations, one of ordinary skill would understand that one or more operations of the method 600 may be transposed and/or performed contemporaneously.

To begin, the method 600 may include an operation 605 for receiving, by a UE, a downlink transmission. The downlink transmission may include a signal from an eNB. However, the downlink transmission may include noise that interferes with the intended signal.

An operation 610 may include detecting for interference associated with reception of the downlink transmission. In various embodiments, the operation 610 may include operations associated with measuring a signal power level and an interference power level. A difference between the measured signal power level and the measured interference power level may be compared to a predetermined threshold associated with IC at the UE. If the difference is greater than (or equal to, depending on the embodiment) the predetermined threshold then it may be inferred that the signal power level and the interference power level are sufficiently disparate for IC techniques to be applied.

However, if the difference between the measured signal power level and the measured interference power level indicates that IC may be prohibitive (e.g., if the difference is less than or equal to the predetermined threshold), then a power adaptation may be necessary to increase the difference between the signal power level and the interference power level so that the UE may perform IC. An operation 615 may comprise generating a request for an adjustment associated with transmission power by a transmitting node to facilitate interference cancellation by the UE.

In one embodiment of the operation 615, the request may be for an either an increase or a decrease in transmission power. In one embodiment, the request may be generated to include an indication of a value for the increase or decrease. This value may be a specific value. For example, the operation 615 may comprise an operation associated with computing a value (e.g., a dB value) that the difference between the signal power level and the interference power level must be increased in order for IC to be performed. This computed value may be included in the request. In another embodiment, the request may include an indication of one or more increments or decrements that the transmitting node is to adjust its transmission power (e.g., an indication of value of a number of standard dB steps the transmitting node is to take up or down).

At an operation 620, the method 600 may include transmitting the generated request for the adjustment to an eNB. In one embodiment, the request may be transmitted to an eNB that is transmitting the intended signal.

In another embodiment, the request may be transmitted to another eNB (e.g., an eNB that is not serving the UE), such as a neighboring eNB that is transmitting noise interfering with the signal. In such an embodiment, the request may be transmitted through a common uplink channel that is associated with requests for transmission power adjustments.

Thereafter, IC may be performed because the difference between the signal power level and the interference power level may be greater than before. In some embodiments, an indication of an adjusted transmission power by the transmitting node may be received. This indication may be used to perform IC at the UE.

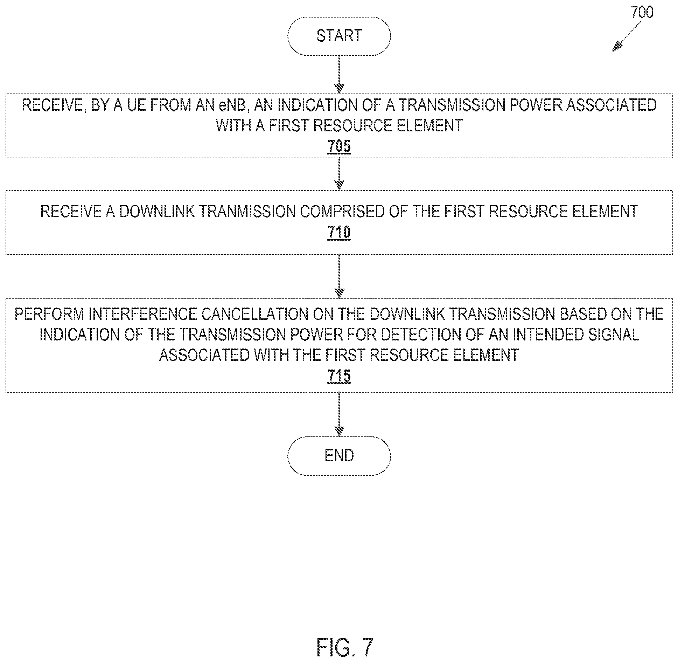

With respect to FIG. 7, a flow diagram illustrates a method 700 for transmission power randomization to facilitate IC at a UE, in accordance with various embodiments. The method 700 may be performed by a UE, such as the UE 150 of FIG. 1. While FIG. 7 illustrates a plurality of sequential operations, one of ordinary skill would understand that one or more operations of the method 700 may be transposed and/or performed contemporaneously.

To begin, the method 700 may include an operation 705 for receiving, by a UE from an eNB, an indication of a transmission power associated with a first resource element. In embodiments, the indication of the transmission power may be a seed. In such embodiments, the operation 705 may include operations associated with generating a sequence associated with transmission power of one or more downlink transmissions based on the seed. While the generated sequence may be random or pseudorandom, it may be generated based on the seed such that the random or pseudorandom sequence is known or available to both the UE and the eNB that is to transmit a signal.

In various embodiments, the operation 705 may further include receiving a fluctuation range. The fluctuation range may be received separately from the indication of the transmission power or may be included therein. In one embodiment, the fluctuation range may be implicitly embedded in the sequence generated from the seed. The fluctuation range may indicate a range that the power level of the intended signal may fluctuate (e.g., [-3 dB, +3 dB]) and may be influenced by channel and/or interference conditions.

The method 700 may further include an operation 710 for receiving a downlink transmission comprised of the first resource element. The downlink transmission may include a signal from an eNB. However, the downlink transmission may include noise that interferes with the intended signal.

Thereafter, an operation 715 may include performing IC on the downlink transmission based on the indication of the transmission power. Accordingly, the intended signal may be detected regardless of interference in the downlink transmission.

In various embodiments, a first transmission power level associated with the intended signal at the first resource element may be identified (e.g., based on a first element of the generated sequence). Therefore, interference having a power level disparate from the first transmission power level may be canceled.

In various embodiments, the downlink transmission may further include a second resource element associated with the intended signal. The second resource element may be associated with a second transmission power level that is different from the first transmission power level. Similar to the first transmission power level, the second transmission power level may be identified, for example, based on a second element of the generated sequence). Interference having a power level disparate from the second transmission power level may be canceled. The different transmission power levels associated with different resource elements may facilitate IC for detection of the intended signal, for example, by effecting an appreciable difference between the signal power level and the interference power level.

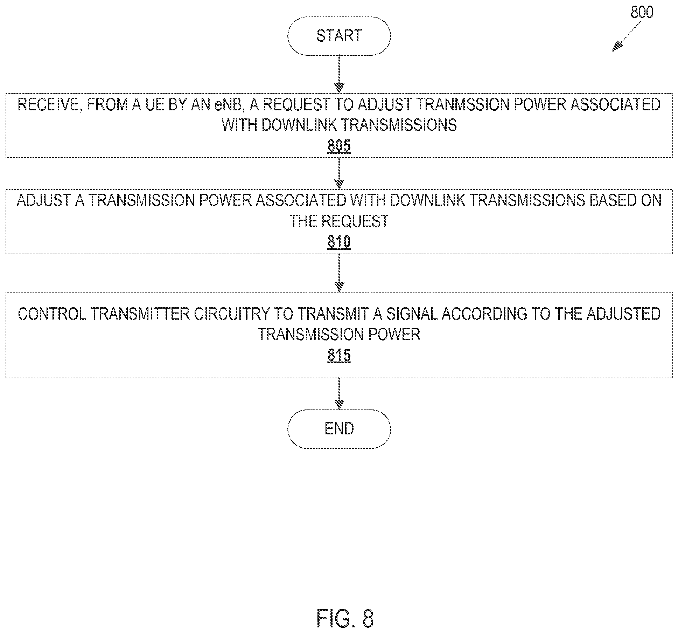

Turning to FIG. 8, a flow diagram illustrates a method 800 for adjusting a transmission power level in response to a request from a UE, in accordance with various embodiments. The method 800 may be performed by an eNB, such as one of the eNBs 105-115 of FIG. 1. While FIG. 8 illustrates a plurality of sequential operations, one of ordinary skill would understand that one or more operations of the method 800 may be transposed and/or performed contemporaneously.

To begin, the method 800 may include an operation 805 for receiving, by an eNB, a request to adjust transmission power associated with downlink transmissions. In one embodiment, this request may be received from a UE that may operate on a cell provided by the eNB.

In another embodiment, the request may be received from a UE that is not served by the eNB (e.g., an UE that may operate on a neighboring cell). In such an embodiment, the request may be received through a common uplink channel that is associated with requests for transmission power adjustments.

An operation 810 may include adjusting the transmission power associated with downlink transmissions based on the request. In one embodiment, the request may be for an either an increase or a decrease in transmission power. In one embodiment, the request may include an indication of a value for the increase or decrease. This value may be a specific value. For example, the operation 810 may comprise an operation associated with adjusting a downlink transmission power level by a value (e.g., a dB value) included in the request. In another embodiment, the request may include an indication of one or more increments or decrements that the transmission power level is to be adjusted its (e.g., an indication of value of a number of standard dB steps the transmitting node is to take up or down).

In some embodiments, the operation 810 may include operations associated with computing an adjusted power level based on the request. For example, the operation 810 may include computing an adjusted power level based on a predetermined algorithm that considers the request. Therefore, operation 810 may include adjusting the transmission power level, but not necessarily by an exact value indicated in the request.

An operation 815 may include controlling transmitter circuitry to transmit a signal according to the adjusted transmission power. In one embodiment, the transmitter circuitry may be remotely located from the eNB, such as at an RRH.

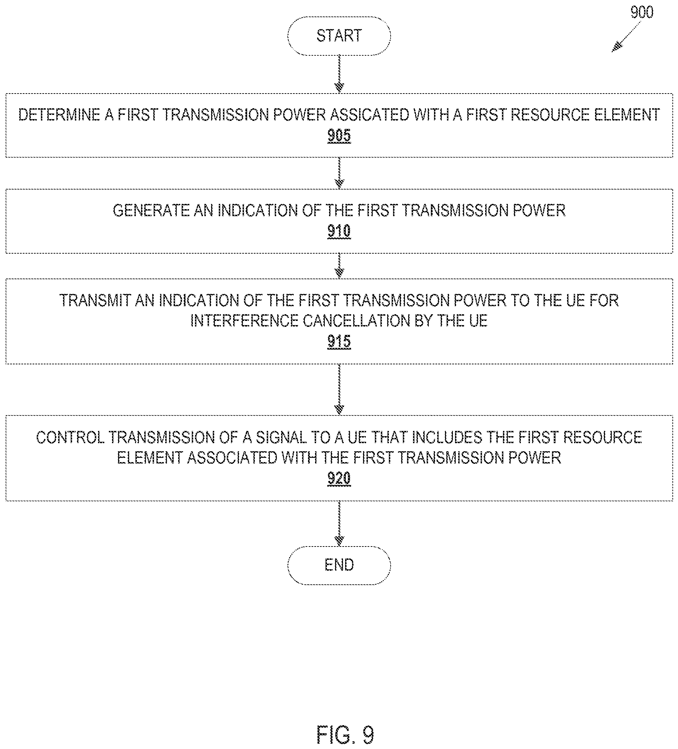

Now with reference to FIG. 9, a flow diagram illustrates a method 900 for adjusting the transmission power of a plurality of resource elements associated with a downlink transmission, in accordance with various embodiments. The method 900 may be performed by an eNB, such as one of the eNBs 105-115 of FIG. 1. While FIG. 9 illustrates a plurality of sequential operations, one of ordinary skill would understand that one or more operations of the method 900 may be transposed and/or performed contemporaneously.

To begin, the method 900 may include an operation 905 for determining, by an eNB, a first transmission power associated with a first resource element. In embodiments, the operation 905 may include operations associated with generating a sequence associated with transmission power of one or more downlink transmissions based on a seed. In some embodiments, the generated sequence may be random or pseudorandom. In various embodiments, the sequence may be comprised of a plurality of values wherein a respective value is associated with the transmission power for a respective resource element.

An operation 910 may include generating an indication of the first transmission power. In various embodiments, the operation 910 may include operations associated with generating a message that includes the seed to be used for generation of the sequence. Thus, both the eNB and the UE may generate a same sequence associated with transmission powers of downlink transmissions.

In various embodiments, the operation 910 may further include determining a fluctuation range. The fluctuation range may be generated separately from the indication of the transmission power or may be included therein. In one embodiment, the fluctuation range may be implicitly embedded in the sequence to be generated from the seed. The fluctuation range may indicate a range that the transmission power of a signal transmitted by the eNB may fluctuate (e.g., [-3 dB, +3 dB]) and may be influenced by channel and/or interference conditions.

The method 900 may further include an operation 910 for transmitting an indication of the first transmission power to the UE to facilitate IC by the UE. In various embodiments, the indication of the first transmission power may be the seed from which the UE is to generate the sequence. In some embodiments, the operation 915 may further include transmitting an indication of the fluctuation range to the UE.

An operation 920 may include controlling transmitter circuitry to transmit a signal having the first resource element according to the determined transmission power. In one embodiment, the transmitter circuitry may be remotely located from the eNB, such as at an RRH.

In various embodiments, the operation 920 may include controlling transmitter circuitry to transmit a signal having a first transmission power level associated with the first resource element (e.g., based on a first element of the generated sequence). In various embodiments, the downlink transmission may further include a second resource element associated with the transmitted signal. The second resource element may be associated with a second transmission power level that is different from the first transmission power level. Similar to the first transmission power level, the second transmission power level may be determined, for example, based on a second element of the generated sequence). The operation 920 may further include transmitting the signal having the second resource element according to the second transmission power level. The different transmission power levels associated with different resource elements may facilitate IC at the UE.

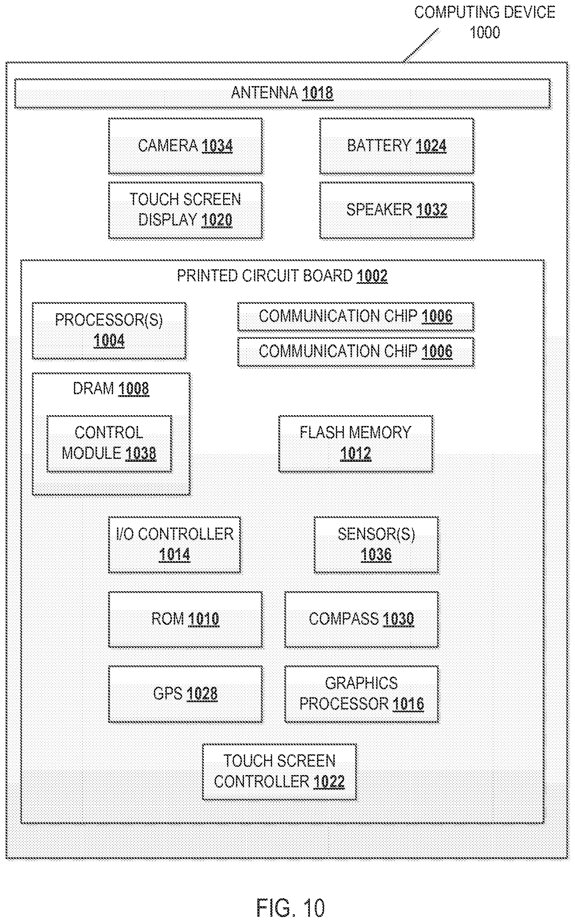

Now with reference to FIG. 10, a block diagram illustrates an example computing device 1100, in accordance with various embodiments. One of the eNBs 105-115 and/or one of the UEs 150-160 of FIG. 1 and described herein may be implemented on a computing device such as computing device 1000. Further, the computing device 1100 may be adapted to perform one or more operations of the methods 600-900 described in FIGs. 6-9, respectively. The computing device 1000 may include a number of components, one or more processors 1004, and one or more communication chips 1006. Depending upon the embodiment, one or more of the enumerated components may comprise "circuitry" of the computing device 1000, such as processing circuitry, communication circuitry, and the like. In various embodiments, the one or more processor(s) 1004 each may be a processor core. In various embodiments, the one or more communication chips 1006 may be physically and electrically coupled with the one or more processor(s) 1004. In further implementations, the communication chips 1006 may be part of the one or more processor(s) 1004. In various embodiments, the computing device 1000 may include a printed circuit board ("PCB") 1002. For these embodiments, the one or more processor(s) 1004 and communication chip 1006 may be disposed thereon. In alternate embodiments, the various components may be coupled without the employment of the PCB 1002.

Depending upon its applications, the computing device 1000 may include other components that may or may not be physically and electrically coupled with the PCB 1002. These other components include, but are not limited to, volatile memory (e.g., dynamic random access memory 1008, also referred to as "DRAM"), non-volatile memory (e.g., read only memory 1010, also referred to as "ROM"), flash memory 1012, an input/output controller 1014, a digital signal processor (not shown), a crypto processor (not shown), a graphics processor 1016, one or more antenna(s) 1018, a display (not shown), a touch screen display 1020, a touch screen controller 1022, a battery 1024, an audio codec (not shown), a video code (not shown), a global navigation satellite system 1028, a compass 1030, an accelerometer (not shown), a gyroscope (not shown), a speaker 1032, a camera 1034, one or more sensors 1036 (e.g., a barometer, Geiger counter, thermometer, viscometer, rheometer, altimeter, or other sensor that may be found in various manufacturing environments or used in other applications), a mass storage device (e.g., a hard disk drive, a solid state drive, compact disk and drive, digital versatile disk and drive, etc.) (not shown), and the like. In various embodiments, the one or more processor(s) 1004 may be integrated on the same die with other components to form a system on a chip ("SOC").

In various embodiments, volatile memory (e.g., DRAM 1008), non-volatile memory (e.g., ROM 1010), flash memory 1012, and the mass storage device (not shown) may include programming instructions configured to enable the computing device 1000, in response to the execution by one or more processor(s) 1004, to practice all or selected aspects of the data exchanges and methods described herein, depending on the embodiment of the computing device 1000 used to implement such data exchanges and methods. More specifically, one or more of the memory components (e.g., DRAM 1008, ROM 1010, flash memory 1012, and the mass storage device) may include temporal and/or persistent copies of instructions that, when executed by one or more processor(s) 1004, enable the computing device 1000 to operate one or more modules 1038 configured to practice all or selected aspects of the data exchanges and method described herein, depending on the embodiment of the computing device 1000 used to implement such data exchanges and methods.

The communication chips 1006 may enable wired and/or wireless communication for the transfer of data to and from the computing device 1000. The term "wireless" and its derivatives may be used to describe circuits, devices, systems, methods, techniques, communication channels, etc., that may communicate data through the use of modulated electromagnetic radiation through a non-solid medium. The term does not imply that the associated devices do not contain any wires, although in some embodiments they might not. The communication chips 1006 may implement any of a number of wireless standards or protocols, including but not limited to LTE, LTE-A, Institute of Electrical and Electronics Engineers ("IEEE") 702.20, General Packet Radio Service ("GPRS"), Evolution Data Optimized ("Ev-DO"), Evolved High Speed Packet Access ("HSPA+"), Evolved High Speed Downlink Packet Access ("HSDPA+"), Evolved High Speed Uplink Packet Access ("HSUPA+"), Global System for Mobile Communications ("GSM"), Enhanced Data Rates for GSM Evolution ("EDGE"), Code Division Multiple Access ("CDMA"), Time Division Multiple Access ("TDMA"), Digital Enhanced Cordless Telecommunications ("DECT"), Bluetooth, derivatives thereof, as well as other wireless protocols that are designated as 3G, 4G, 5G, and beyond. The computing device 1000 may include a plurality of communication chips 1006 adapted to perform different communication functions. For example, a first communication chip 1006 may be dedicated to shorter range wireless communications, such as Wi-Fi and Bluetooth, whereas a second communication chip 1006 may be dedicated to longer range wireless communications, such as GPS, EDGE, GPRS, CDMA, WiMAX, LTE, LTE-A, Ev-DO, and the like.

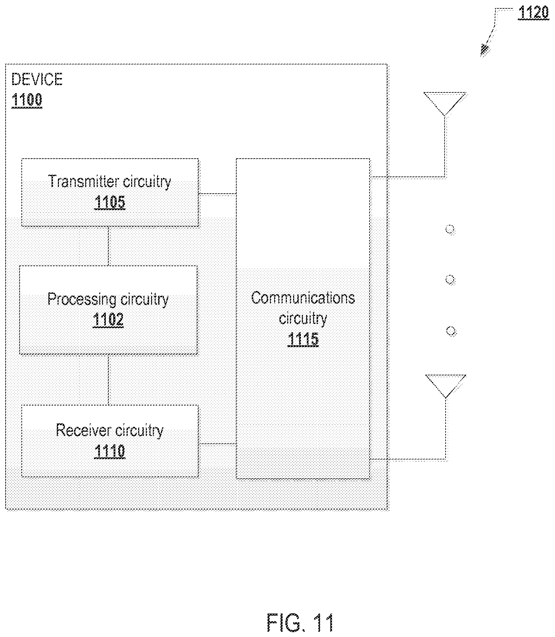

FIG. 11 illustrates a device 1100 in accordance with some embodiments. The device 1100 may be similar to and/or included in one of the eNBs 105-115 and/or one of the UEs 150-160 of FIG. 1. The device 1100 may include processing circuitry 1102, transmitter circuitry 1105, receiver circuitry 1110, communications circuitry 1115, and one or more antennas 1120 coupled with each other at least as shown.

Briefly, the communications circuitry 1115 may be coupled with the antennas 1120 to facilitate over-the-air communication of signals to/from the device 1100. Operations of the communications circuitry 1115 may include, but are not limited to, filtering, amplifying, storing, modulating, demodulating, transforming, etc.

The transmitter circuitry 1105 may be coupled with the communications circuitry 1115 and may be configured to provide signals to the communications circuitry 1115 for transmission by the antennas 1120. In various embodiments, the transmitter circuitry 1105 may be configured to provide various signal processing operations on the signal to provide the signal to the communications circuitry 1115 with appropriate characteristics. In some embodiments, the transmitter circuitry 1105 may be adapted to generate signals. Further, the transmitter circuitry 1105 may be adapted to scramble, multiplex, and/or modulate various signals prior to transmission by the communications circuitry 1115.

The receiver circuitry 1110 may be coupled with the communications circuitry 1115 and may be configured to receive signals from the communications circuitry 1115. In some embodiments, the receiver circuitry 1110 may be adapted to generate signals. Further, the receiver circuitry 1110 may be adapted to descramble, de-multiplex, and/or demodulate various signals following reception by the communications circuitry 1115.

The processing circuitry 1102 may be coupled with the transmitter circuitry 1105, the receiver circuitry 1110, and/or the communications circuitry 1115. The processing circuitry may be adapted to perform operations described herein with respect to an eNB and/or a UE. In some embodiments, the processing circuitry 1102 may be adapted to generate, process, and/or manipulate data that is to be transmitted over the air, e.g., to and/or from an eNB and/or a UE. In particular, the processing circuitry 1102 may be adapted to perform operations associated with adjusting transmission power levels.

Some or all of the communications circuitry 1115, transmitter circuitry 1105, and/or receiver circuitry 1110 may be included in, for example, a communication chip and/or communicatively coupled with a printed circuit board as described with respect to FIG. 10.

Some portions of the preceding detailed description have been presented in terms of algorithms and symbolic representations of operations on data bits within a computer memory. These algorithmic descriptions and representations are the ways used by those skilled in the data processing arts to most effectively convey the substance of their work to others skilled in the arts. An algorithm is here, and generally, conceived to be a self-consistent sequence of operations leading to a desired result. The operations are those requiring physical manipulations of physical quantities.

It should be borne in mind, however, that all of these and similar terms are to be associated with the appropriate physical quantities and are merely convenient labels applied to these quantities. Unless specifically stated otherwise as apparent from the above discussion, it is appreciated that throughout the description, discussions utilizing terms such as those set forth in the claims below refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission, or display devices.

Embodiments of the invention also relate to an apparatus for performing the operations herein. Such a computer program is stored in a non-transitory computer-readable medium. A machine-readable medium includes any mechanism for storing information in a form readable by a machine (e.g., a computer). For example, a machine-readable (e.g., computer-readable) medium includes a machine- (e.g., a computer-) readable storage medium (e.g., read only memory ("ROM"), random access memory ("RAM"), magnetic disk storage media, optical storage media, flash memory devices).

The processes or methods depicted in the preceding figures can be performed by processing logic that comprises hardware (e.g., circuitry, dedicated logic, etc.), software (e.g., embodied on a non-transitory computer-readable medium), or a combination of both. Although the processes or methods are described above in terms of some sequential operations, it should be appreciated that some of the operations described can be performed in a different order. Moreover, some operations can be performed in parallel rather than sequentially.

Embodiments of the present invention are not described with reference to any particular programming language. It will be appreciated that a variety of programming languages can be used to implement the teachings of embodiments of the invention as described herein. In the foregoing Specification, embodiments of the invention have been described with reference to specific exemplary embodiments thereof. It will be evident that various modifications can be made thereto without departing from the broader scope of the invention as set forth in the following claims. The Specification and drawings are, accordingly, to be regarded in an illustrative sense rather than a restrictive sense.

## Claims

1. An apparatus (1100) to be included in an evolved Node B, "eNB", the apparatus (1100) comprising:processing circuitry (1102) configured to determine a first transmission power associated with a first resource element, further configured to generate an indication of the first transmission power, and further configured to control transmission of a signal to a user equipment, "UE", that includes the first resource element associated with the first transmission power; and transmitter circuitry (1105), coupled with the processing circuitry (1102), configured to transmit an indication of the first transmission power to the UE for interference cancellation by the UE; **characterized in that**
the processing circuitry (1102) is further configured to determine a fluctuation range, in decibels, associated with the signal, and further wherein the transmitter circuitry (1105) is further configured to transmit an indication of the fluctuation range to the UE.

2. The apparatus of claim 1, wherein the processing circuitry is further configured to detect that the UE is near a cell edge and is configured to schedule the UE on a region of resource elements, including the first resource element, associated with cell-edge UEs based on the detection, and further wherein the processing circuitry is configured to control transmission powers associated with resource elements of the region based on a pseudorandom sequence, and optionally, the processing circuitry is configured to coordinate the first transmission power associated with the first resource element with another eNB.

3. User equipment, "UE", circuitry comprising:
receiver circuitry (1110) configured to receive, from an evolved Node B, "eNB", an indication of a transmission power associated with a first resource element and configured to receive a downlink transmission comprised of the first resource element;
processing circuitry (1102) configured to perform interference cancellation on the downlink transmission based on the indication of the transmission power for detection of an intended signal associated with the first resource element; **characterized in that**
the processing circuitry (1102) is further configured to perform the interference cancellation on the downlink transmission further based on a fluctuation range, in decibels, associated with a transmission power of the downlink transmission, wherein the receiver circuitry (1110) is further configured to receive an indication of the fluctuation range from the eNB.

4. The UE circuitry of claim 3, wherein the indication of the transmission power is a seed and the processing circuitry is configured to generate a sequence associated with the transmission power of the downlink transmission based on the seed, and further wherein the processing circuitry is configured to perform the interference cancellation on the downlink transmission based on the generated sequence.

5. The UE circuitry of claim 4, wherein the downlink transmission is comprised of the first resource element associated with a first transmission power and a second resource element associated with a second transmission power, and further wherein the processing circuitry is configured to perform the interference cancellation on the downlink transmission based on the generated sequence for detection of the intended signal associated with the first resource element associated with the first transmission power and the second resource element associated with the second transmission power.

6. A computer-implemented method (700) comprising:
receiving (705), from an evolved Node B, "eNB", an indication of a transmission power associated with a first resource element;
receiving (710) a downlink transmission comprised of the first resource element; and
performing (715) interference cancellation on the downlink transmission based on the indication of the transmission power for detection of an intended signal associated with the first resource element;
**characterized in that** receiving (705) the indication includes receiving a fluctuation range, in decibels, from the eNB and performing (715) the interference cancellation on the downlink transmission is further based on the fluctuation range associated with the transmission power of the downlink transmission.

7. The computer-implemented method (700) of claim 6, further comprising generating a sequence associated with transmission power of the downlink transmission based on the seed, the sequence to be used for the performance of the interference cancellation.

8. A non-transitory computing device-readable media comprising computing device-executable instructions, wherein the instructions, in response to execution by a user equipment, "UE", cause the UE to:
receive (705), from an evolved Node B, "eNB", an indication of a transmission power associated with a first resource element;
receive (710) a downlink transmission comprised of the first resource element; and
perform (715) interference cancellation on the downlink transmission based on the indication of the transmission power for detection of an intended signal associated with the first resource element;
**characterized in that** the performance of the interference cancellation on the downlink transmission is further based on a fluctuation range, in decibels, associated with transmission power of the downlink transmission.

9. The non-transitory computing device-readable media of claim 8, wherein the indication of the transmission power is a seed and the instructions are further to cause the UEto:
generate a sequence associated with transmission power of the downlink transmission based on the seed, the sequence to be used for the performance of the interference cancellation.

## Patentansprüche

1. Einrichtung (1100) zur Aufnahme in eine evolved Node B, "eNB", die Einrichtung (1100) umfassend: eine Verarbeitungsschaltung (1102), die dazu ausgelegt ist, eine erste Übertragungsleistung in Verbindung mit einem ersten Ressourcenelement zu bestimmen, die ferner dazu ausgelegt ist, eine Angabe der ersten Übertragungsleistung zu erzeugen, und die ferner dazu ausgelegt ist, die Übertragung eines Signals zu einer Benutzerausrüstung, "UE", zu steuern, die das erste Ressourcenelement in Verbindung mit der ersten Übertragungsleistung einschließt; und eine Senderschaltung (1105), die mit der Verarbeitungsschaltung (1102) gekoppelt und dazu ausgelegt ist, eine Angabe der ersten Übertragungsleistung zu der UE zur Interferenzunterdrückung durch die UE zu übertragen; **dadurch gekennzeichnet, dass**
die Verarbeitungsschaltung (1102) ferner dazu ausgelegt ist, einen Schwankungsbereich, in Dezibel, in Verbindung mit dem Signal zu bestimmen, und wobei ferner die Senderschaltung (1105) ferner dazu ausgelegt ist, eine Angabe des Schwankungsbereichs zu der UE zu übertragen.

2. Einrichtung nach Anspruch 1, wobei die Verarbeitungsschaltung ferner dazu ausgelegt ist, zu erfassen, dass sich die UE in der Nähe eines Zellrands befindet und dazu ausgelegt ist, die UE auf einem Bereich eines Ressourcenelements, einschließlich des ersten Ressourcenelements, in Verbindung mit Zellrand-UEs basierend auf der Erfassung zu planen, und wobei ferner die Verarbeitungsschaltung dazu ausgelegt ist, Übertragungsleistungen in Verbindung mit Ressourcenelementen des Bereichs basierend auf einer Pseudozufallssequenz zu steuern, und die Verarbeitungsschaltung wahlweise dazu ausgelegt ist, die erste Übertragungsleistung in Verbindung mit dem ersten Ressourcenelement mit einer anderen eNB zu koordinieren.

3. Benutzerausrüstungsschaltung, "UE"-Schaltung, umfassend:
eine Empfängerschaltung (1110), die dazu ausgelegt ist, von einer evolved Node B, "eNB", eine Angabe einer Übertragungsleistung in Verbindung mit einem ersten Ressourcenelement zu empfangen, und dazu ausgelegt ist, eine Downlink-Übertragung bestehend aus dem ersten Ressourcenelement zu empfangen;
eine Verarbeitungsschaltung (1102), die dazu ausgelegt ist, eine Interferenzunterdrückung bei der Downlink-Übertragung basierend auf der Angabe der Übertragungsleistung zur Erfassung eines beabsichtigten Signals in Verbindung mit dem ersten Ressourcenelement durchzuführen; **dadurch gekennzeichnet, dass**
die Verarbeitungsschaltung (1102) ferner dazu ausgelegt ist, die Interferenzunterdrückung bei der Downlink-Übertragung ferner basierend auf einem Schwankungsbereich, in Dezibel, in Verbindung mit einer Übertragungsleistung der Downlink-Übertragung durchzuführen, wobei die Empfängerschaltung (1110) ferner dazu ausgelegt ist, eine Angabe des Schwankungsbereichs von der eNB zu empfangen.

4. UE-Schaltung nach Anspruch 3, wobei die Angabe der Übertragungsleistung ein Startwert ist und die Verarbeitungsschaltung dazu ausgelegt ist, eine Sequenz in Verbindung mit der Übertragungsleistung der Downlink-Übertragung basierend auf dem Startwert zu erzeugen, und wobei ferner die Verarbeitungsschaltung dazu ausgelegt ist, die Interferenzunterdrückung bei der Downlink-Übertragung basierend auf der erzeugten Sequenz durchzuführen.

5. UE-Schaltung nach Anspruch 4, wobei die Downlink-Übertragung aus dem ersten Ressourcenelement in Verbindung mit einer ersten Übertragungsleistung und einem zweiten Ressourcenelement in Verbindung mit einer zweiten Übertragungsleistung besteht, und wobei ferner die Verarbeitungsschaltung dazu ausgelegt ist, die Interferenzunterdrückung bei der Downlink-Übertragung basierend auf der erzeugten Sequenz zur Erfassung des beabsichtigten Signals in Verbindung mit dem ersten Ressourcenelement in Verbindung mit der ersten Übertragungsleistung und dem zweiten Ressourcenelement in Verbindung mit der zweiten Übertragungsleistung durchzuführen.

6. Computerimplementiertes Verfahren (700), umfassend:
Empfangen (705), von einer evolved Node B, "eNB", einer Angabe einer Übertragungsleistung in Verbindung mit einem ersten Ressourcenelement;
Empfangen (710) einer Downlink-Übertragung bestehend aus dem ersten Ressourcenelement; und
Durchführen (715) einer Interferenzunterdrückung bei der Downlink-Übertragung basierend auf der Angabe der Übertragungsleistung zur Erfassung eines beabsichtigten Signals in Verbindung mit dem ersten Ressourcenelement;
**dadurch gekennzeichnet, dass** das Empfangen (705) der Angabe ein Empfangen eines Schwankungsbereichs, in Dezibel, von der eNB einschließt, und das Durchführen (715) der Interferenzunterdrückung bei der Downlink-Übertragung ferner auf dem Schwankungsbereich in Verbindung mit der Übertragungsleistung der Downlink-Übertragung basiert.

7. Computerimplementiertes Verfahren (700) nach Anspruch 6, ferner umfassend ein Erzeugen einer Sequenz in Verbindung mit einer Übertragungsleistung der Downlink-Übertragung basierend auf dem Startwert, wobei die Sequenz zur Durchführung der Interferenzunterdrückung zu verwenden ist.

8. Nicht-flüchtige rechenvorrichtungslesbare Medien, umfassend rechenvorrichtungsausführbare Befehle, wobei die Befehle, als Reaktion auf eine Ausführung durch eine Benutzerausrüstung, "UE", die UE veranlassen zum:
Empfangen (705), von einer evolved Node B, "eNB", einer Angabe einer Übertragungsleistung in Verbindung mit einem ersten Ressourcenelement;
Empfangen (710) einer Downlink-Übertragung bestehend aus dem ersten Ressourcenelement; und
Durchführen (715) einer Interferenzunterdrückung bei der Downlink-Übertragung basierend auf der Angabe der Übertragungsleistung zur Erfassung eines beabsichtigten Signals in Verbindung mit dem ersten Ressourcenelement; **dadurch gekennzeichnet, dass** die Durchführung der Interferenzunterdrückung bei der Downlink-Übertragung ferner auf einem Schwankungsbereich, in Dezibel, in Verbindung mit einer Übertragungsleistung der Downlink-Übertragung basiert.

9. Nicht-flüchtige rechenvorrichtungslesbare Medien nach Anspruch 8, wobei die Angabe der Übertragungsleistung ein Startwert ist und die Befehle die UE ferner veranlassen sollen zum:
Erzeugen einer Sequenz in Verbindung mit einer Übertragungsleistung der Downlink-Übertragung basierend auf dem Startwert, wobei die Sequenz zur Durchführung der Interferenzunterdrückung zu verwenden ist.

## Revendications

1. Appareil (1100) destiné à être incorporé dans un Node B évolué, "eNB", l'appareil (1100) comprenant : des circuits de traitement (1102) configurés pour déterminer une première puissance d'émission associée à un premier élément de ressource, configurés en outre pour générer une indication de la première puissance d'émission et configurés en outre pour commander l'émission d'un signal à destination d'un équipement utilisateur, "UE", qui comporte le premier élément de ressource associé à la première puissance d'émission ; et des circuits émetteurs (1105), couplés aux circuits de traitement (1102), configurés pour émettre une indication de la première puissance d'émission à destination de l'UE à des fins d'annulation d'interférence par l'UE ; **caractérisé en ce que**
les circuits de traitement (1102) sont configurés en outre pour déterminer un intervalle de fluctuation, en décibels, associé au signal, et dans lequel, en outre, les circuits émetteurs (1105) sont configurés en outre pour émettre une indication de l'intervalle de fluctuation à destination de l'UE.

2. Appareil selon la revendication 1, dans lequel les circuits de traitement sont configurés en outre pour détecter que l'UE est proche d'une bordure de cellule et sont configurés pour ordonnancer l'UE sur une région d'éléments de ressource, comportant le premier élément de ressource, associée à des UE de bordure de cellule sur la base de la détection, et dans lequel en outre les circuits de traitement sont configurés pour commander des puissances d'émission associées à des éléments de ressource de la région sur la base d'une séquence pseudo-aléatoire et, éventuellement, les circuits de traitement sont configurés pour coordonner la première puissance d'émission associée au premier élément de ressource avec un autre eNB.

3. Circuits d'équipement utilisateur, "UE", comprenant :
des circuits récepteurs (1110) configurés pour recevoir, en provenance d'un Node B évolué, "eNB", une indication d'une puissance d'émission associée à un premier élément de ressource et configurés pour recevoir une émission sur voie descendante comprenant le premier élément de ressource ;
des circuits de traitement (1102) configurés pour réaliser une annulation d'interférence sur l'émission sur voie descendante sur la base de l'indication de la puissance d'émission à des fins de détection d'un signal prévu associé au premier élément de ressource ; **caractérisés en ce que**
les circuits de traitement (1102) sont configurés en outre pour réaliser l'annulation d'interférence sur l'émission sur voie descendante sur la base en outre d'un intervalle de fluctuation, en décibels, associé à une puissance d'émission de l'émission sur voie descendante, les circuits récepteurs (1110) étant configurés en outre pour recevoir une indication de l'intervalle de fluctuation en provenance de l'eNB.

4. Circuits d'UE selon la revendication 3, dans lesquels l'indication de la puissance d'émission consiste en un germe et les circuits de traitement sont configurés pour générer une séquence associée à la puissance d'émission de l'émission sur voie descendante sur la base du germe, et dans lesquels en outre les circuits de traitement sont configurés pour réaliser l'annulation d'interférence sur l'émission sur voie descendante sur la base de la séquence générée.

5. Circuits d'UE selon la revendication 4, dans lesquels l'émission sur voie descendante comprend le premier élément de ressource associé à une première puissance d'émission et un deuxième élément de ressource associé à une deuxième puissance d'émission, et dans lesquels en outre les circuits de traitement sont configurés pour réaliser l'annulation d'interférence sur l'émission sur voie descendante sur la base de la séquence générée à des fins de détection du signal prévu associé au premier élément de ressource associé à la première puissance d'émission et au deuxième élément de ressource associé à la deuxième puissance d'émission.

6. Procédé (700) mis en œuvre par ordinateur, comprenant :
la réception (705), en provenance d'un Node B évolué, "eNB", d'une indication d'une puissance d'émission associée à un premier élément de ressource ;
la réception (710) d'une émission sur voie descendante comprenant le premier élément de ressource ; et
la réalisation (715) d'une annulation d'interférence sur l'émission sur voie descendante sur la base de l'indication de la puissance d'émission à des fins de détection d'un signal prévu associé au premier élément de ressource ;
**caractérisé en ce que** la réception (705) de l'indication comporte la réception d'un intervalle de fluctuation, en décibels, en provenance de l'eNB et la réalisation (715) de l'annulation d'interférence sur l'émission sur voie descendante est basée en outre sur l'intervalle de fluctuation associé à la puissance d'émission de l'émission sur voie descendante.

7. Procédé (700) mis en œuvre par ordinateur selon la revendication 6, comprenant en outre la génération d'une séquence associée à la puissance d'émission de l'émission sur voie descendante sur la base du germe, la séquence étant destinée à être utilisée pour la réalisation de l'annulation d'interférence.

8. Supports non transitoires lisibles par dispositif informatique, comprenant des instructions exécutables par dispositif informatique qui, suite à leur exécution par un équipement utilisateur, "UE", amènent l'UE à :
recevoir (705), en provenance d'un Node B évolué, "eNB", une indication d'une puissance d'émission associée à un premier élément de ressource ;
recevoir (710) une émission sur voie descendante comprenant le premier élément de ressource ; et
réaliser (715) une annulation d'interférence sur l'émission sur voie descendante sur la base de l'indication de la puissance d'émission à des fins de détection d'un signal prévu associé au premier élément de ressource ;
**caractérisé en ce que** la réalisation de l'annulation d'interférence sur l'émission sur voie descendante est basée en outre sur un intervalle de fluctuation, en décibels, associé à la puissance d'émission de l'émission sur voie descendante.

9. Supports non transitoires lisibles par dispositif informatique selon la revendication 8, dans lequel l'indication de la puissance d'émission est basée sur une semence et les instructions sont destinées en outre à amener l'UE à :
générer une séquence associée à la puissance d'émission de l'émission sur voie descendante sur la base du germe, la séquence étant destinée à être utilisée pour la réalisation de l'annulation d'interférence.
